# EUROPEAN PATENT SPECIFICATION

(11) **EP 3 689 084 B1**
(45) Date of publication and mention of the grant of the patent: **01.11.2023**
(21) Application number: 17926429.6
(22) Date of filing: 27.09.2017
(51) Int. Cl.: H04W 74/06, H04W 68/02, H04W 56/00

(54) **NETWORK-INITIATED UPLINK SMALL DATA TRANSMISSION FOR NB IOT**
NETZWERKINITIIERTE UPLINK-KLEINDATENÜBERTRAGUNG FÜR NB IOT
TRANSMISSION DE PETITES DONNÉES DE LIAISON MONTANTE DÉCLENCHÉE PAR LE RÉSEAU POUR IOT NB

(43) Date of publication of application: 05.08.2020
(73) Proprietor: Nokia Technologies Oy, 02610 Espoo (FI)
(72) Inventor: SELVAGANAPATHY, Srinivasan, Bangalore (IN); LI, Haitao, Beijing 100102 (CN)
(74) Representative: Page White Farrer
(86) International application number: PCT/CN2017/103750
(87) International publication number: WO 2019/061098

(56) References cited:
- CN-A- 104 105 214
- US-A1- 2014 233 538
- US-A1- 2017 094 711
- LG ELECTRONICS: "Data transmission during random access procedure in NB-IoT", 3GPP DRAFT; R1-1713103 DATA TRANSMISSION DURING RANDOM ACCESS PROCEDURE IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG1, no. Prague, Czech Republic; 20170821 - 20170825 20 August 2017 (2017-08-20), XP051315912, Retrieved from the Internet: URL:http://www.3gpp.org/ftp/Meetings_3GPP_ SYNC/RAN1/Docs/ [retrieved on 2017-08-20]
- LG ELECTRONICS: "Data transmission during random access procedure in MTC", 3GPP DRAFT; R1-1713099 DATA TRANSMISSION DURING RANDOM ACCESS PROCEDURE IN MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Prague, Czech Republic; 20170821 - 20170825 20 August 2017 (2017-08-20), XP051315908, Retrieved from the Internet: URL:http://www.3gpp.org/ftp/Meetings_3GPP_ SYNC/RAN1/Docs/ [retrieved on 2017-08-20]
- QUALCOMM INCORPORATED: "UL early data transmission", 3GPP DRAFT; R2-1708239 UL EARLY DATA TRANSMISSION-EMTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318141, Retrieved from the Internet: URL:http://www.3gpp.org/ftp/Meetings_3GPP_ SYNC/RAN2/Docs/ [retrieved on 2017-08-20]
- "Early data transmission", 3GPP TSG-RAN WGI Meeting #89 R1-1708800, 19 May 2017 (2017-05-19), XP051273983,
- ERICSSON: "Bearer Setup and Security Considerations for Early Data in MTC", 3GPP TSG-RAN WG2 #99 R2-1708630, 25 August 2017 (2017-08-25), XP051318456,

## Description

### TECHNICAL FIELD

This disclosure relates to NB IoT (Narrowband Internet of Things) technology. More particularly, this disclosure relates to signaling enhancements for network-initiated uplink small data transmissions.

### BACKGROUND

A new Work Item for Rel.-15 for further enhancing NB-IoT functionality has been approved. One of the objectives of the WI is to investigate enhancements for small data transmission having the possibility for sending UL or DL data with a reduced amount of signaling procedures.

The discussions in 3GPP on this topic are currently focused on having early uplink data transmissions during a RACH (random access channel) procedure, and, in addition, early DL data transmissions for small downlink data.

For CIoT (Cellular Internet of Things) use cases, such as energy meters and water meters, reports can be generated autonomously by the devices when a server configures the periodicity and start time within the periodicity for each of the devices, so that the CIoT traffic load is distributed over the desired time interval. For such a mechanism, the server needs to assign the scheduling information carefully for multiple devices. However, this may need to be changed when the configuration for given device is to be changed to a different periodicity.

Instead of this option, the application server may decide to poll the devices whenever a report is required. In this case, a network-initiated page is triggered to collect the report from a UE (user equipment). For this option, no additional configuration on scheduling and periodicity is needed. Instead, the application decides when to collect from different devices based on network loading conditions. This option has flexibility for collecting the reports.

Moreover, even with periodic reporting enabled at a device, the application server may require the latest status at an arbitrary time for a different analytic purpose. In this case, as well, the network-initiated page is triggered to collect the required data from a device.

Network-initiated uplink small data transmission is required for these use cases. The present disclosure provides enhancements to the signaling procedure associated with network initiated uplink small data transmission, which enhancements can be combined with the page response.

According to current specifications, when a page is received by a UE, the UE first establishes an RRC (radio resource control) connection, and sends an NAS (non-access stratum) message as a page response. After the page response is sent, the CN (core network) sends the downlink small data containing the network command to the UE. The UE receives this command and sends the status via uplink transmission.

If the page is meant to collect the latest status from the UE, the steps associated with the page response and the downlink transmission can be optimized.

According to current specifications, when the CN triggers a page to the UE requesting a status report, the following steps are required at a high level:
- CN sends the paging message to ENB (eNodeB).
- ENB sends the paging message to UE.
- UE triggers the RACH procedure and informs that RRC connection setup is meant for page response by setting the establishment cause as MT (mobile terminated) Access (Msg3).
- ENB completes the RRC connection setup procedure. UE sends the NAS message for page response to CN (Msg5).
- CN sends the DL NAS message containing the command to trigger status report. ENB sends this message via NPDSCH (Narrowband physical downlink shared channel).
- UE sends the status report in uplink NPUSCH (Narrowband physical uplink shared channel) message (status report).

As is apparent, the above steps involve three uplink transmissions from the UE (Msg3, Msg5 and status report).

The signaling procedure for getting fixed size status reports can be optimized as described below in connection with the present disclosure.

LG ELECTRONICS: "Data transmission during random access procedure in NB-IoT" (R1-1713103) discusses options for DL/UL data transmission during random access procedure in NB-IoT.

LG ELECTRONICS: "Data transmission during random access procedure in MTC" (R1-1713099) discusses options for DL/UL data transmission during random access procedure in MTC.

### SUMMARY

In a first aspect of the present disclosure, a method comprises: receiving a first paging message from a core network, said first paging message being sent to trigger a response including an uplink data transmission having a specific maximum size; sending a second paging message to a user equipment, said second paging message having a dedicated preamble and an indication of said specific maximum size; receiving a response to the second paging message, said response having a dedicated preamble indicating that the user equipment has data available to send, said data being within said specific maximum size; sending a reply to the user equipment, said reply containing a timing advance and an uplink resource allocation corresponding to a size of said available data; and receiving said available data from the user equipment in accordance with said timing advance and said uplink resource allocation.

In a second aspect of the present disclosure, an apparatus comprises at least one processor, and at least one memory including computer program code. The at least one memory and the computer program code are configured, with the at least one processor, to cause the apparatus to perform the following: receive a first paging message from a core network, said first paging message being sent to trigger a response including an uplink data transmission having a specific maximum size; send a second paging message to a user equipment, said second paging message having a dedicated preamble and an indication of said specific maximum size; receive a response to the second paging message, said response having a dedicated preamble indicating that the user equipment has data available to send, said data being within said specific maximum size; send a reply to the user equipment, said reply containing a timing advance and an uplink resource allocation corresponding to a size of said available data; and receive said available data from the user equipment in accordance with said timing advance and said uplink resource allocation.

In a third aspect of the present disclosure, an apparatus comprises: means for receiving a first paging message from a core network, said first paging message being sent to trigger a response including an uplink data transmission having a specific maximum size; means for sending a second paging message to a user equipment, said second paging message having a dedicated preamble and an indication of said specific maximum size; means for receiving a response to the second paging message, said response having a dedicated preamble indicating that the user equipment has data available to send, said data being within said specific maximum size; means for sending a reply to the user equipment, said reply containing a timing advance and an uplink resource allocation corresponding to a size of said available data; and means for receiving said available data from the user equipment in accordance with said timing advance and said uplink resource allocation.

In a fourth aspect of the present disclosure, a computer-program product comprises a non-transitory computer-readable storage medium bearing computer program code embodied therein for use with a computer. The computer program code comprises code for performing at least the following: receiving a first paging message from a core network, said first paging message being sent to trigger a response including an uplink data transmission having a specific maximum size; sending a second paging message to a user equipment, said second paging message having a dedicated preamble and an indication of said specific maximum size; receiving a response to the second paging message, said response having a dedicated preamble indicating that the user equipment has data available to send, said data being within said specific maximum size; sending a reply to the user equipment, said reply containing a timing advance and an uplink resource allocation corresponding to a size of said available data; and receiving said available data from the user equipment in accordance with said timing advance and said uplink resource allocation.

In a fifth aspect of the present disclosure, a method comprises: receiving a paging message from an eNodeB, said paging message having a dedicated preamble and an indication of a specific maximum size for an uplink data transmission; sending a response to the paging message, said response having a dedicated preamble indicating that data is available to send, said data being within said specific maximum size; receiving a reply from the eNodeB, said reply containing a timing advance and an uplink resource allocation corresponding to a size of said available data; and sending said available data to the eNodeB in accordance with said timing advance and said uplink resource allocation.

In a sixth aspect of the present disclosure, an apparatus comprises at least one processor, and at least one memory including computer program code. The at least one memory and the computer program code are configured, with the at least one processor, to cause the apparatus to perform the following: receive a paging message from an eNodeB, said paging message having a dedicated preamble and an indication of a specific maximum size for an uplink data transmission; send a response to the paging message, said response having a dedicated preamble indicating that data is available to send, said data being within said specific maximum size; receive a reply from the eNodeB, said reply containing a timing advance and an uplink resource allocation corresponding to a size of said available data; and send said available data to the eNodeB in accordance with said timing advance and said uplink resource allocation.

In a seventh aspect of the present disclosure, an apparatus comprises: means for receiving a paging message from an eNodeB, said paging message having a dedicated preamble and an indication of a specific maximum size for an uplink data transmission; means for sending a response to the paging message, said response having a dedicated preamble indicating that data is available to send, said data being within said specific maximum size; means for receiving a reply from the eNodeB, said reply containing a timing advance and an uplink resource allocation corresponding to a size of said available data; and means for sending said available data to the eNodeB in accordance with said timing advance and said uplink resource allocation.

In an eighth aspect of the present disclosure, a computer-program product comprises a non-transitory computer-readable storage medium bearing computer program code embodied therein for use with a computer. The computer program code comprises code for performing at least the following: receiving a paging message from an eNodeB, said paging message having a dedicated preamble and an indication of a specific maximum size for an uplink data transmission; sending a response to the paging message, said response having a dedicated preamble indicating that data is available to send, said data being within said specific maximum size; receiving a reply from the eNodeB, said reply containing a timing advance and an uplink resource allocation corresponding to a size of said available data; and sending said available data to the eNodeB in accordance with said timing advance and said uplink resource allocation.

The invention relates to methods and apparatuses as set forth in the claims. It will be understood that aspects of this disclosure falling outside the scope of the claims may not be part of the invention but may be useful to understand the invention.

### BRIEF DESCRIPTION OF THE DRAWINGS

The foregoing and other aspects of these teachings are made more evident in the following detailed description, when read in conjunction with the attached drawing figures.
Figure 1 is a signaling diagram illustrating a first method of the present disclosure.
Figure 2 is a signaling diagram illustrating a second method of the present disclosure.
Figure 3 shows a simplified block diagram of certain apparatus according to various exemplary aspects of the present disclosure.

### DETAILED DESCRIPTION

As noted above, the goal of the present disclosure is to provide signaling enhancement in the form of a new signaling procedure for network-initiated uplink small data transmissions. The general idea is for the Core Network (CN) to send a paging message to an eNB to request an uplink data transmission from a UE, wherein the paging message includes a payload size of the uplink data expected from the UE, so that, if any available uplink data in the UE is within the limit set by the CN in the paging message, the eNB can pre-allocate uplink resources for the UE, and, subsequently, the UE can transmit uplink data in response to the paging message without any need to provide a buffer status report.

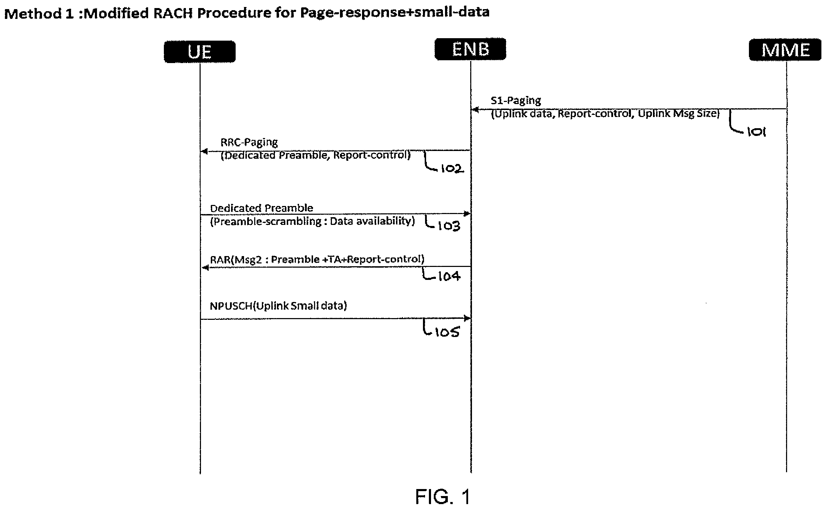

Two methods for reaching this goal are proposed. The first is illustrated by the signaling diagram of Figure 1, to which reference will be made in the discussion to follow.

The first method is a modified RACH (Random Access Channel) for combining a response to a paging message and small data. The first method involves the use of a dedicated preamble for an uplink small data transmission triggered based on the paging message.

Referring to Figure 1, the headings UE and ENB refer to the user equipment and base station (eNB), respectively. MME (Mobility Management Entity) refers to the CN (Core Network).

In Figure 1, the CN (MME) first sends a paging message 101 to an ENB over an S1 interface by which they are connected to one another. The paging message 101 indicates that it is meant to trigger a response including an uplink data transmission with a specific maximum size. The CN may also include in the paging message a "report control" parameter of size one to two octets; the "report control" parameter can be sent as part of a random access procedure itself.

On reception of the S1 paging message, the ENB sends an RRC (Radio Resource Control) paging message 102 to the UE. RRC paging message 102 contains a dedicated preamble to be used for triggering the RACH access procedure. The RRC paging message 102 also indicates, in addition to, the dedicated preamble, the allowed report size for the page response.

In response, the UE sends Msg1 (Dedicated Preamble) 103 when the data the UE has available to send is within the size limit. Otherwise, the UE falls back to a normal (legacy) method of RACH access procedure via a contention-based mechanism.

On receiving the Dedicated Preamble from the UE, the ENB sends Msg2 104 containing a timing advance (TA) and an uplink resource allocation corresponding to the expected uplink data size.

The UE subsequently transmits the uplink small data 105 by using the received timing advance and the uplink resource allocation parameters received from the ENB in Msg2 104.

When the UE does not have any report to send in response to the paging message, it can so indicate as 1-bit information over the dedicated preamble to avoid unnecessary uplink resource allocation. In such a case, the ENB will stop the procedure, and respond to the CN that no uplink data is available at that time.

In case the report type needs to be controlled from application, the CN (MME) can also send an additional "report control" parameter along with report-size information. In this case, the RAR (Random Access Response) message, which includes the "TA + Uplink-Allocation" information, can also include the report-control parameter.

This first method is applicable for cases where the purpose of the network-initiated page is to collect a default report which would otherwise have been sent as part of a periodic interval. In such cases, the paging will not have any downlink data associated with it.

The second method is a modified direct NPDCCH (Narrowband Physical Downlink Control Channel) allocation for uplink small data. The second method involves the use of a small uplink data transmission in response to a modified small downlink data transmission using a dedicated preamble and a dedicated RNTI (Radio Network Temporary Identifier).

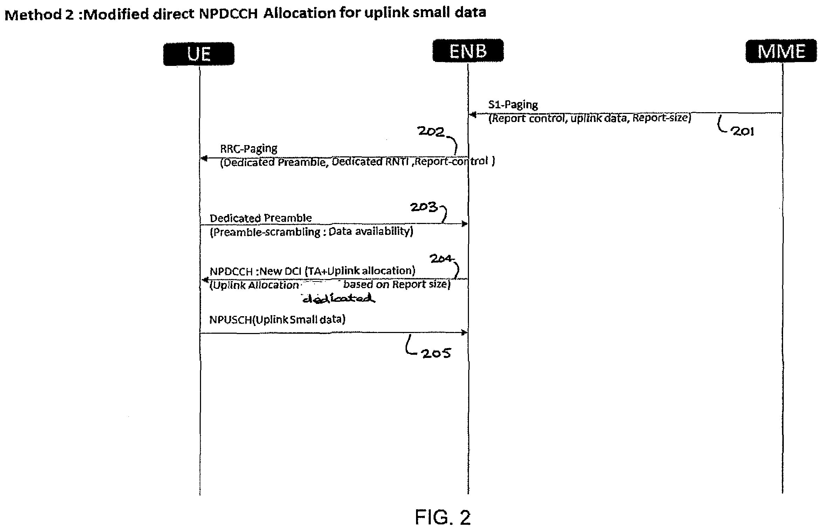

This second method begins the same way as the first method. In Figure 2, the CN (MME) first sends a paging message 201 to an ENB over an S1 interface by which they are connected to one another. The paging message 201 indicates that it is meant to trigger a response including an uplink data transmission with a specific maximum size. The CN may also include in the paging message a "report control" parameter of size one to two octets; the "report control" parameter can be sent as part of a random access procedure itself.

On reception of the S1 paging message, the ENB sends an RRC (Radio Resource Control) paging message 202 to the UE. RRC paging message 202 contains a dedicated preamble and a dedicated RNTI.

In response, the UE sends a Dedicated Preamble 203, and the ENB sends an uplink allocation and timing advance information in message 204 to the UE using the new DCI (Downlink Control Information) format with the dedicated RNTI. The new DCI contains the uplink allocation and timing advance in NPDCCH to dedicated RNTI for sending uplink small data in response to paging so that the UE is not required to decode NPDSCH.

Subsequently, the UE sends in message 205 the uplink small data over the allocated PUSCH (Physical Uplink Shared Channel) using the timing advance provided in message 204.

When the required data to be sent is larger than the report size given by the ENB, the UE will trigger the legacy RACH procedure for sending the page response.

When small downlink data also needs to be communicated along with getting a report from an MS (Mobile Station), the ENB first completes the downlink transmission using the dedicated RNTI. On receiving the NPUSCH ACK for the downlink data, the ENB can schedule PUSCH as per the expected report size using NPDCCH. Without knowledge of the message size, ENB may need first to get the BSR (Buffer Status Report) via additional NPUSCH which will increase the delay and energy consumption.

For the expected uplink data size, MME (CN) can acquire this information using following means:
1) based on tracking of prior uplink data sizes (for example, in response to paging) by an MME;
2) based on application originated information received by an MME received from an MTC-IWF;
3) based on application originated information received by an MME from an application server (for example, through a services capability server and/or a service capability exposure function); or
4) based on tracking of prior uplink data sizes as tracked by a home subscriber server.

The two methods of the present disclosure may be summarized as follows.

### Method 1:

- Method in which core network informs ENB that the paging is meant to trigger uplink data transmission with specific maximum size.
   ∘ In this method CN also include "report control" parameter of size 1 to 2 octets which can be sent as part of random access procedure itself.
- Method for UE to send dedicated preamble when the UE wants to only report the small data as part of page response, otherwise fallback to normal RACH Access procedure via contention-based mechanism.
- Method at UE to indicate non-availability of report on the dedicated preamble to avoid unnecessary uplink resource allocation when no data needs to be sent.

### Method 2:

- Method at ENB to send new DCI containing uplink allocation and timing advance to dedicated RNTI for sending uplink small data in response to paging.

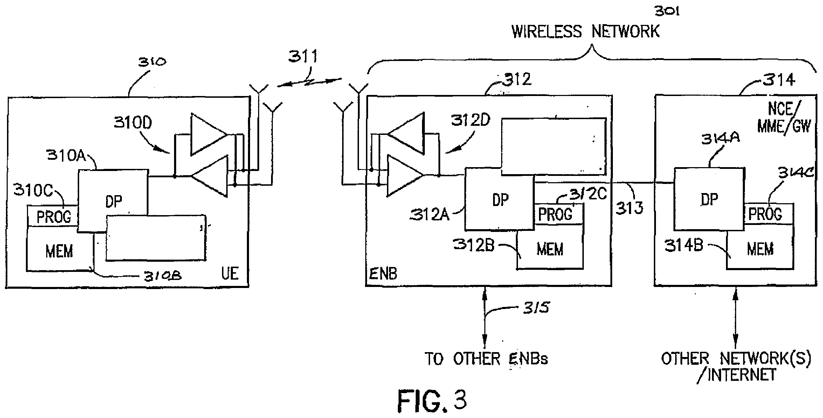

Reference is now made to Figure 3 for illustrating a simplified block diagram of various electronic devices and apparatus that are suitable for use in practicing the exemplary aspects of the present disclosure. In Figure 3, a wireless network 301 is adapted for communication over a wireless link 311 with an apparatus, such as a mobile communication device, which is referred to as a UE 310, via a wireless network access node, such as a base station or relay station or remote radio head, and more specifically shown as an ENB 312. The network 301 may include a network control element (NCE) 314 (CN), which serves as a mobility management entity (MME) and/or a serving gateway (S-GW) to a broader network, such as a public switched telephone/data network and/or the Internet.

The UE 310 includes a controller, such as a computer or a data processor (DP) 310A, a computer-readable memory medium embodied as a memory (MEM) 310B, which stores a program of computer instructions (PROG) 310C, and a suitable radio frequency (RF) transmitter and receiver 310D for bi-directional wireless communications with the ENB 312 via one or more antennas. The ENB 312 also includes a controller, such as a computer or a data processor (DP) 312A, a computer-readable memory medium embodied as a memory (MEM) 312B that stores a program of computer instructions (PROG) 312C, and a suitable RF transmitter and receiver 312D for communication with the UE 310 via one or more antennas.

The NCE 314 also includes a controller, such as a computer or a data processor (DP) 314A, and a computer-readable memory medium embodied as a memory (MEM) 314B that stores a program of computer instructions (PROG) 314C.

The ENB 312 is coupled via a data/control path 313 to the NCE 314. The path 313 may be implemented as an S1 interface when the network 301 is an LTE network. The ENB 312 may also be coupled to another ENB via data/control path 315, which may be implemented as an X2 interface when the network 301 is an LTE network.

At least one of the PROGs 310C, 312C, and 314C is assumed to include program instructions that, when executed by the associated DP, enable the device to operate in accordance with the exemplary aspects of this disclosure as was detailed above with respect to Figures 1 and 2. That is, the exemplary aspects of this disclosure may be implemented at least in part by computer software executable by the DP 310A of the UE 310, and/or by the DP 312A of the ENB 312, and/or by the DP 314A of the NCE 314, or by hardware, or by a combination of software and hardware (and firmware).

In general, the various aspects of the UE 310 can include, but are not limited to, cellular telephones; personal digital assistants (PDAs) having wireless communication capabilities; portable computers having wireless communication capabilities; image capture devices, such as digital cameras, having wireless communication capabilities; gaming devices having wireless communication capabilities; music storage and playback appliances having wireless communication capabilities; and Internet appliances permitting wireless Internet access and browsing, as well as portable units or terminals that incorporate combinations of such functions.

The computer-readable MEMs 310B, 312B, and 314B may be of any type suitable to the local technical environment and may be implemented using any suitable data storage technology, such as semiconductor-based memory devices, flash memory, magnetic-memory devices and systems, optical-memory devices and systems, fixed memory and removable memory. The DPs 310A, 312A, and 314A may be of any type suitable to the local technical environment, and may include one or more of general purpose computers, special purpose computers, microprocessors, digital signal processors (DSPs) and processors based on a multicore processor architecture, as non-limiting examples.

It should be noted that the various DPs 310A, 312A, 314A may be implemented as one or more processors/chips, either or both of the UE 310 and the ENB 312 may include more than one transmitter and/or receiver 310D, 312D, and particularly the ENB 312 may have its antennas mounted remotely from the other components of the ENB 312, such as for example tower-mounted antennas.

In general, the various exemplary aspects may be implemented in hardware or special purpose circuits, software, logic or any combination thereof. For example, some aspects may be implemented in hardware, while other aspects may be implemented in firmware or software, which may be executed by a controller, microprocessor or other computing device, although the disclosure is not limited thereto. While various aspects of the exemplary aspects of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It should thus be appreciated that at least some aspects of the exemplary aspects of the disclosures may be practiced in various components, such as integrated circuit chips and modules, and that the exemplary aspects of this disclosure may be realized in an apparatus that is embodied as an integrated circuit. The integrated circuit, or circuits, may comprise circuitry, as well as possibly firmware, for embodying at least one or more of a data processor or data processors, a digital signal processor or processors, baseband circuitry and radio frequency circuitry that are configurable so as to operate in accordance with the exemplary aspects of this disclosure.

Various modifications and adaptations to the foregoing exemplary aspects of this disclosure may become apparent to those skilled in the relevant arts in view of the foregoing description, when read in conjunction with the accompanying drawings. For example, while the exemplary aspects have been described above in the context of advancements to the 5G NR system (Rel.-15), it should be appreciated that the exemplary aspects of this disclosure are not limited for use with only this one particular type of wireless communication system. The exemplary aspects of the disclosure presented herein are explanatory and not exhaustive or otherwise limiting of the scope of the disclosure.

The terminology used herein is for the purpose of describing particular aspects only and is not intended to be limiting of the disclosure. As used herein, the singular forms "a", "an", and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description, but is not intended to be exhaustive or limited to the disclosure in the form disclosed. Many modifications and variations will be apparent to those of ordinary skill in the art without departing from the scope of the disclosure. The aspect was chosen and described in order to best explain the principles of the disclosure and the practical application, and to enable others of ordinary skill in the art to understand the disclosure for various aspects with various modifications as are suited to the particular use contemplated.

Various modifications and adaptations may become apparent to those skilled in the relevant arts in view of the foregoing description, when read in conjunction with the accompanying drawings. However, any and all modifications of the teachings of this disclosure will still fall within the scope of the non-limiting aspects of this disclosure.

Although described in the context of particular aspects, it will be apparent to those skilled in the art that a number of modifications and various changes to these teachings may occur. Thus, while the disclosure has been particularly shown and described with respect to one or more aspects thereof, it will be understood by those skilled in the art that certain modifications or changes may be made therein without departing from the scope of the disclosure as set forth above, or from the scope of the claims to follow.

## Claims

1. A method performed by a base station, the method comprising:
receiving a first paging message (101) from a core network, said first paging message (101) being sent to trigger a response including an uplink data transmission having a specific maximum size;
sending a second paging message (102) to a user equipment, said second paging message (102) having a dedicated preamble and an indication of said specific maximum size;
receiving a response to the second paging message (102), said response having the dedicated preamble when the user equipment has data available to send, said data being within said specific maximum size;
sending a reply to the user equipment, said reply containing a timing advance and an uplink resource allocation corresponding to a size of said available data; and
receiving said available data from the user equipment in accordance with said timing advance and said uplink resource allocation.

2. The method as claimed in claim 1, wherein the first paging message (101) includes a report-control parameter of size one to two octets, and wherein said second paging-message (102) dedicated preamble includes said indication of said specific maximum size.

3. The method as claimed in claim 1 or 2, wherein said second paging message (102) includes a dedicated radio network temporary identifier, and wherein said reply uses a downlink control information with the dedicated radio network temporary identifier in a narrowband physical downlink control channel.

4. An apparatus comprising:
means for receiving a first paging message (101) from a core network, said first paging message (101) being sent to trigger a response including an uplink data transmission having a specific maximum size;
means for sending a second paging message (102) to a user equipment, said second paging message (102) having a dedicated preamble and an indication of said specific maximum size;
means for receiving a response to the second paging message (102), said response having the dedicated preamble when the user equipment has data available to send, said data being within said specific maximum size:
means for sending a reply to the user equipment, said reply containing a timing advance and an uplink resource allocation corresponding to a size of said available data; and
means for receiving said available data from the user equipment in accordance with said timing advance and said uplink resource allocation.

5. The apparatus as claimed in claim 4, wherein the first paging message (101) includes a report-control parameter of size one to two octets.

6. The apparatus as claimed in any one of claims 4-5, wherein said second paging-message (102) dedicated preamble includes said indication of said specific maximum size.

7. The apparatus as claimed in any one of claims 4-6, wherein said second paging message (102) includes a dedicated radio network temporary identifier, and wherein said reply uses a downlink control information with the dedicated radio network temporary identifier in a narrowband physical downlink control channel.

8. The apparatus as claimed in claim 7, wherein the downlink control information includes the timing advance and the uplink resource allocation.

9. The apparatus as claimed in any one of claims 4-8, further comprising:
when the response indicates the user equipment has no data available to send, means for indicating to the core network that no uplink data is available, and wherein a 1-bit information is used for the indicating.

10. A method performed by a user equipment, the method comprising:
receiving a paging message (102) from a base station, said paging message (102) having a dedicated preamble and an indication of a specific maximum size for an uplink data transmission;
sending a response to the paging message (102), said response having the dedicated preamble when data is available to send, said data being within said specific maximum size;
receiving a reply from the base station, said reply containing a timing advance and an uplink resource allocation corresponding to a size of said available data; and
sending said available data to the base station in accordance with said timing advance and said uplink resource allocation.

11. An apparatus comprising:
means for receiving a paging message (102) from a base station, said paging message having a dedicated preamble and an indication of a specific maximum size for an uplink data transmission;
means for sending a response to the paging message (102), said response having the dedicated preamble when data is available to send, said data being within said specific maximum size;
means for receiving a reply from the base station, said reply containing a timing advance and an uplink resource allocation corresponding to a size of said available data; and
means for sending said available data to the base station in accordance with said timing advance and said uplink resource allocation.

12. The apparatus as claimed in claim 11, wherein said paging message -dedicated preamble includes said indication of maximum size.

13. The apparatus as claimed in claim 11 or 12, wherein said paging message (102) includes a dedicated radio network temporary identifier, and wherein said reply uses a downlink control information with the dedicated radio network temporary identifier in a narrowband physical downlink control channel.

14. The apparatus as claimed in claim 13, wherein the downlink control information includes the timing advance and the uplink resource allocation.

15. The apparatus as claimed in any one of claims 11-14, wherein when the user equipment has no data available to send, a 1-bit information is sent with said dedicated preamble comprised in the response to indicate that the user equipment does not have data available to send.

## Patentansprüche

1. Verfahren, das von einer Basisstation durchgeführt wird, wobei das Verfahren umfasst:
Empfangen einer ersten Funkrufnachricht (101) von einem Kernnetz, wobei die erste Funkrufnachricht (101) gesendet wird, um eine Antwort auszulösen, die eine Uplink-Datenübertragung mit einem spezifischen maximalen Umfang einschließt;
Senden einer zweiten Funkrufnachricht (102) an ein Endgerät, wobei die zweite Funkrufnachricht (102) eine dedizierte Präambel und eine Angabe des spezifischen maximalen Umfangs aufweist;
Empfangen einer Antwort auf die zweite Funkrufnachricht (102), wobei die Antwort die dedizierte Präambel aufweist, wenn das Endgerät Daten zum Senden zur Verfügung hat, wobei die Daten innerhalb des spezifischen maximalen Umfangs liegen;
Senden einer Antwort an das Endgerät, wobei die Antwort einen Wert für die zeitliche Vorverschiebung (Timing Advance) und eine Zuweisung von Uplink-Ressourcen enthält, die einem Umfang der verfügbaren Daten entsprechen; und
Empfangen der verfügbaren Daten von dem Endgerät in Übereinstimmung mit dem Wert für die zeitliche Vorverschiebung und der Zuweisung der Uplink-Ressourcen.

2. Verfahren nach Anspruch 1, wobei die erste Funkrufnachricht (101) einen Berichtsteuerparameter mit einem Umfang von ein bis zwei Oktetten enthält, und wobei die dedizierte Präambel der zweiten Funkrufnachricht (102) die Angabe des spezifischen maximalen Umfangs enthält.

3. Verfahren nach Anspruch 1 oder 2, wobei die zweite Funkrufnachricht (102) eine temporäre Kennung für ein dediziertes Funknetz enthält, und wobei die Antwort eine Downlink-Steuerinformation mit der temporären Kennung für ein dediziertes Funknetz in einem physikalischen Schmalband-Downlink-Steuerkanal verwendet.

4. Vorrichtung, umfassend:
Mittel zum Empfangen einer ersten Funkrufnachricht (101) von einem Kernnetz, wobei die erste Funkrufnachricht (101) gesendet wird, um eine Antwort auszulösen, die eine Uplink-Datenübertragung mit einem spezifischen maximalen Umfang einschließt;
Mittel zum Senden einer zweiten Funkrufnachricht (102) an ein Endgerät, wobei die zweite Funkrufnachricht (102) eine dedizierte Präambel und eine Angabe des spezifischen maximalen Umfangs aufweist;
Mittel zum Empfangen einer Antwort auf die zweite Funkrufnachricht (102), wobei die Antwort die dedizierte Präambel aufweist, wenn das Endgerät Daten zum Senden zur Verfügung hat, wobei die Daten innerhalb des spezifischen maximalen Umfangs liegen:
Mittel zum Senden einer Antwort an das Endgerät, wobei die Antwort einen Wert für die zeitliche Vorverschiebung (Timing Advance) und eine Zuweisung von Uplink-Ressourcen enthält, die einem Umfang der verfügbaren Daten entsprechen; und
Mittel zum Empfangen der verfügbaren Daten von dem Endgerät in Übereinstimmung mit dem Wert für die zeitliche Vorverschiebung und der Zuweisung der Uplink-Ressourcen.

5. Vorrichtung nach Anspruch 4, wobei die erste Funkrufnachricht (101) einen Berichtsteuerparameter mit einem Umfang von ein bis zwei Oktetten enthält.

6. Vorrichtung nach einem der Ansprüche 4 bis 5, wobei die dedizierte Präambel der zweiten Funkrufnachricht (102) die Angabe des spezifischen maximalen Umfangs enthält.

7. Vorrichtung nach einem der Ansprüche 4 bis 6, wobei die zweite Funkrufnachricht (102) eine temporäre Kennung für ein dediziertes Funknetz enthält, und wobei die Antwort eine Downlink-Steuerinformation mit der temporären Kennung für ein dediziertes Funknetz in einem physikalischen Schmalband-Downlink-Steuerkanal verwendet.

8. Vorrichtung nach Anspruch 7, wobei die Downlink-Steuerinformation den Wert für die zeitliche Vorverschiebung und die Zuweisung der Uplink-Ressourcen enthält.

9. Vorrichtung nach einem der Ansprüche 4 bis 8, ferner umfassend:
wenn die Antwort angibt, dass das Endgerät keine Daten zum Senden zur Verfügung hat, Mittel, um dem Kernnetz anzugeben, dass keine Uplink-Daten verfügbar sind, und wobei eine 1-Bit-Information für das Angeben verwendet wird.

10. Verfahren, das von einem Endgerät durchgeführt wird, wobei das Verfahren umfasst:
Empfangen einer Funkrufnachricht (102) von einer Basisstation, wobei die Funkrufnachricht (102) eine dedizierte Präambel und eine Angabe eines spezifischen maximalen Umfangs für eine Uplink-Datenübertragung aufweist;
Senden einer Antwort auf die Funkrufnachricht (102), wobei die Antwort die dedizierte Präambel aufweist, wenn Daten zum Senden zur Verfügung stehen, wobei die Daten innerhalb des spezifischen maximalen Umfangs liegen;
Empfangen einer Antwort von der Basisstation, wobei die Antwort einen Wert für die zeitliche Vorverschiebung (Timing Advance) und eine Zuweisung von Uplink-Ressourcen enthält, die einem Umfang der verfügbaren Daten entsprechen; und
Senden der verfügbaren Daten an die Basisstation in Übereinstimmung mit dem Wert für die zeitliche Vorverschiebung und der Zuweisung der Uplink-Ressourcen.

11. Vorrichtung, umfassend:
Mittel zum Empfangen einer Funkrufnachricht (102) von einer Basisstation, wobei die Funkrufnachricht eine dedizierte Präambel und eine Angabe eines spezifischen maximalen Umfangs für eine Uplink-Datenübertragung aufweist;
Mittel zum Senden einer Antwort auf die Funkrufnachricht (102), wobei die Antwort die dedizierte Präambel aufweist, wenn Daten zum Senden zur Verfügung stehen, wobei die Daten innerhalb des spezifischen maximalen Umfangs liegen;
Mittel zum Empfangen einer Antwort von der Basisstation, wobei die Antwort einen Wert für die zeitliche Vorverschiebung (Timing Advance) und eine Zuweisung von Uplink-Ressourcen enthält, die einem Umfang der verfügbaren Daten entsprechen; und
Mittel zum Senden der verfügbaren Daten an die Basisstation in Übereinstimmung mit dem Wert für die zeitliche Vorverschiebung und der Zuweisung der Uplink-Ressourcen.

12. Vorrichtung nach Anspruch 11, wobei die dedizierte Präambel der Funkrufnachricht die Angabe des maximalen Umfangs enthält.

13. Vorrichtung nach Anspruch 11 oder 12, wobei die Funkrufnachricht (102) eine temporäre Kennung für ein dediziertes Funknetz enthält, und wobei die Antwort eine Downlink-Steuerinformation mit der temporären Kennung für ein dediziertes Funknetz in einem physikalischen Schmalband-Downlink-Steuerkanal verwendet.

14. Vorrichtung nach Anspruch 13, wobei die Downlink-Steuerinformation den Wert für die zeitliche Vorverschiebung und die Zuweisung der Uplink-Ressourcen enthält.

15. Vorrichtung nach einem der Ansprüche 11 bis 14, wobei, wenn das Endgerät keine Daten zum Senden zur Verfügung hat, eine 1-Bit-Information mit der in der Antwort enthaltenen dedizierten Präambel gesendet wird, um anzugeben, dass das Benutzergerät keine Daten zum Senden zur Verfügung hat.

## Revendications

1. Procédé effectué par une station de base, le procédé comprenant :
la réception d'un premier message de radiomessagerie (101) en provenance d'un réseau central, ledit premier message de radiomessagerie (101) étant envoyé pour déclencher une réponse comportant une transmission de données de liaison montante ayant une taille maximale spécifique ;
l'envoi d'un deuxième message de radiomessagerie (102) à un équipement utilisateur, ledit deuxième message de radiomessagerie (102) comportant un préambule dédié et une indication de la taille maximale spécifique ;
la réception d'une réponse au deuxième message de radiomessagerie (102), ladite réponse comportant le préambule dédié lorsque l'équipement utilisateur dispose de données disponibles à envoyer, lesdites données étant comprises dans ladite taille maximale spécifique ;
l'envoi d'une réponse à l'équipement utilisateur, ladite réponse contenant une avance de temps et une allocation de ressources de liaison montante correspondant à la taille desdites données disponibles ; et
la réception desdites données disponibles en provenance de l'équipement utilisateur conformément à ladite avance de temps et à ladite allocation de ressources de liaison montante.

2. Procédé selon la revendication 1, dans lequel le premier message de radiomessagerie (101) comporte un paramètre de commande de rapport d'une taille de un à deux octets, et dans lequel ledit préambule dédié de deuxième message de radiomessagerie (102) comporte ladite indication de la taille maximale spécifique.

3. Procédé selon la revendication 1 ou 2, dans lequel ledit deuxième message de radiomessagerie (102) comporte un identifiant temporaire de réseau radio dédié, et dans lequel ladite réponse utilise des informations de commande de liaison descendante avec l'identifiant temporaire de réseau radio dédié dans un canal de commande de liaison descendante physique à bande étroite.

4. Appareil comprenant :
des moyens pour recevoir un premier message de radiomessagerie (101) en provenance d'un réseau central, ledit premier message de radiomessagerie (101) étant envoyé pour déclencher une réponse comportant une transmission de données de liaison montante ayant une taille maximale spécifique ;
des moyens pour envoyer un deuxième message de radiomessagerie (102) à un équipement utilisateur, ledit deuxième message de radiomessagerie (102) ayant un préambule dédié et une indication de la taille maximale spécifique ;
des moyens pour recevoir une réponse au deuxième message de radiomessagerie (102), ladite réponse comportant le préambule dédié lorsque l'équipement utilisateur dispose de données disponibles à envoyer, lesdites données étant comprises dans ladite taille maximale spécifique :
des moyens pour envoyer une réponse à l'équipement utilisateur, ladite réponse contenant une avance de temps et une allocation de ressources de liaison montante correspondant à la taille desdites données disponibles ; et
des moyens pour recevoir lesdites données disponibles en provenance de l'équipement utilisateur conformément à ladite avance de temps et à ladite allocation de ressources de liaison montante.

5. Appareil selon la revendication 4, dans lequel le premier message de radiomessagerie (101) comporte un paramètre de commande de rapport d'une taille de un à deux octets.

6. Appareil selon l'une des revendications 4 et 5, dans lequel ledit préambule dédié de deuxième message de radiomessagerie (102) comporte ladite indication de ladite taille maximale spécifique.

7. Appareil selon l'une des revendications 4 à 6, dans lequel ledit deuxième message de radiomessagerie (102) comporte un identifiant temporaire de réseau radio dédié, et dans lequel ladite réponse utilise des informations de commande de liaison descendante avec l'identifiant temporaire de réseau radio dédié dans un canal de commande de liaison descendante physique à bande étroite.

8. Appareil selon la revendication 7, dans lequel les informations de commande de liaison descendante comportent l'avance de temps et l'allocation de ressources de liaison montante.

9. Appareil selon l'une des revendications 4 à 8, comprenant en outre :
lorsque la réponse indique que l'équipement utilisateur ne dispose pas de données disponibles à envoyer, des moyens pour indiquer au réseau central qu'aucune donnée de liaison montante n'est disponible, et dans lequel une information de 1 bit est utilisée pour l'indication.

10. Procédé effectué par un équipement utilisateur, le procédé comprenant :
la réception d'un message de radiomessagerie (102) en provenance d'une station de base, ledit message de radiomessagerie (102) ayant un préambule dédié et une indication d'une taille maximale spécifique pour une transmission de données de liaison montante ;
l'envoi d'une réponse au message de radiomessagerie (102), ladite réponse comportant le préambule dédié lorsque des données sont disponibles pour être envoyées, lesdites données étant comprises dans ladite taille maximale spécifique ;
la réception d'une réponse en provenance de la station de base, ladite réponse contenant une avance de temps et une allocation de ressources de liaison montante correspondant à la taille desdites données disponibles ; et
l'envoi desdites données disponibles à la station de base conformément à ladite avance de temps et à ladite allocation de ressources de liaison montante.

11. Appareil comprenant :
des moyens pour recevoir un message de radiomessagerie (102) en provenance de une station de base, ledit message de radiomessagerie comportant un préambule dédié et une indication d'une taille maximale spécifique pour une transmission de données de liaison montante ;
des moyens pour envoyer une réponse au message de radiomessagerie (102), ladite réponse comportant le préambule dédié lorsque des données sont disponibles pour être envoyées, lesdites données étant comprises dans ladite taille maximale spécifique ;
des moyens pour recevoir une réponse en provenance de la station de base, ladite réponse contenant une avance de temps et une allocation de ressources de liaison montante correspondant à la taille desdites données disponibles ; et
des moyens pour envoyer lesdites données disponibles à la station de base conformément à ladite avance de temps et à ladite allocation de ressources de liaison montante.

12. Appareil selon la revendication 11, dans lequel ledit préambule dédié de message de radiomessagerie comporte ladite indication de la taille maximale.

13. Appareil selon la revendication 11 ou 12, dans lequel ledit message de radiomessagerie (102) comporte un identifiant temporaire de réseau radio dédié, et dans lequel ladite réponse utilise des informations de commande de liaison descendante avec l'identifiant temporaire de réseau radio dédié dans un canal de commande de liaison descendante physique à bande étroite.

14. Appareil selon la revendication 13, dans lequel les informations de commande de liaison descendante comportent l'avance de temps et l'allocation de ressources de liaison montante.

15. Appareil selon l'une des revendications 11 à 14, dans lequel lorsque l'équipement utilisateur ne dispose pas de données disponibles à envoyer, une information de 1 bit est envoyée avec ledit préambule dédié compris dans la réponse pour indiquer que l'équipement utilisateur ne dispose pas de données disponibles à envoyer.
